# EUROPÄISCHE PATENTANMELDUNG

(11) **EP 1 271 094 A1**
(43) Veröffentlichungstag der Anmeldung: **02.01.2003**
(21) Anmeldenummer: 02008353.1
(22) Anmeldetag: 12.04.2002
(51) Int. Cl.: G01B 11/02, G01B 7/02, G01B 11/22

(54) **Borhrungstiefenmesser für ein Bohrgerät**

(30) Priorität: 29.06.2001 DE 10131656
(71) Anmelder: ITW Befestigungssysteme GmbH, 91522 Ansbach (DE)
(72) Erfinder: Biersack, Horst, 91623 Sachsen (DE); Göbel, Joachim, 91459 Markt Erlbach (DE)
(74) Vertreter: Matschkur, Peter

(57) **Zusammenfassung**

Vorrichtung zur Messung der Tiefe einer Bohrung, die von einem Bohrgerät, insbesondere einem handgeführten Bohrgerät, erzeugt wird, gekennzeichnet durch einen an einem Lagerabschnitt (6) in der Nähe des rotierenden Bohrkopfes des Bohrgerätes (13) angeordneten berührungslosen Abstandsmesser (8) zur Bestimmung des sich mit der Bohrtiefe entsprechend ändernden Abstandes vom Werkstück.

## Beschreibung

Die Erfindung bezieht sich auf eine Vorrichtung zur Messung der Tiefe einer Bohrung, die von einem Bohrgerät, insbesondere einem handgeführten Bohrgerät, erzeugt wird.

Bei ortsfesten Ständerbohrmaschinen ergibt sich die Möglichkeit, die Bohrtiefe durch den jeweiligen Spindelvorschub zu messen, ein Verfahren das bei handgeführten Bohrgeräten grundsätzlich nicht anwendbar ist.

Für handgeführte Bohrgeräte ist es zwar bereits bekannt, mechanische Abstandhalter zwischen Werkzeug und Werkstück vorzusehen, die verhindern, dass das Werkzeug tiefer in das Werkstück eindringt, als es vorher mit dem Abstandhalter eingestellt wurde. Solche Abstandhalter müssen aber vor dem Bohren durch eine Maßverkörperung auf die Länge des jeweiligen Werkzeugs eingestellt werden, damit die vorgesehene Bohrungstiefe eingehalten werden kann. Dies bedeutet bei jedem Werkzeugwechsel ein umständliches Messen der Werkzeuglänge und ein ebenso umständliches Einstellen des Abstandhalters. In der Praxis hat sich gerade bei handgeführten Bohrgeräten gezeigt, das dieses Einrichten nicht einfach zu bewerkstelligen ist. Es muss das Bohrgerät und eine Maßverkörperung gehalten werden, die Feststellvorrichtung des Abstandhalters gelöst und wieder festgestellt werden und schließlich der Abstandhalter selbst auf die gewünschte Tiefe eingestellt werden. Diese Tätigkeiten müssen alle mehr oder weniger gleichzeitig ausgeführt werden.

Der Erfindung liegt daher die Aufgabe zugrunde, eine Vorrichtung zur Messung der Tiefe einer Bohrung, die von einem Bohrgerät erzeugt wird, zu schaffen, die auch bei handgeführten Bohrgeräten eine einfache Bestimmung der Bohrtiefe und ein einfaches Einhalten eines vorgegebenen Wertes einer solchen Bohrtiefe gestattet.

Zur Lösung dieser Aufgabe ist eine derartige Vorrichtung erfindungsgemäß gekennzeichnet durch einen, an einem Lagerabschnitt in der Nähe des rotierenden Bohrkopfes des Bohrgerätes angeordneten, berührungslosen Abstandmesser zur Bestimmung des sich mit der Bohrtiefe entsprechend ändernden Abstandes vom Werkstück.

Der Abstandmesser, der eine auf optischer, akustischer, kapazitiver oder induktiver Basis arbeitende Sensorik aufweisen kann, bestimmt die Bohrtiefe bevorzugt jeweils als Differenz des aktuellen Abstandes und des Anfangsabstandes beim Ansetzen des Bohrgerätes am Werkstück. Unter Werkstück versteht man dabei im Sinne der Erfindung jedes Bauteil, in welches ein Bohrloch einer vorgegebenen Tiefe gebohrt werden soll, also beispielsweise auch eine Wand oder eine Decke.

Der Abstandmesser kann in Ausgestaltung der Erfindung eine, vorzugsweise Akku- oder Batterie- betriebene, Elektronik aufweisen, der eine Anzeigevorrichtung für die jeweilige Bohrtiefe zugeordnet ist, wobei bevorzugt eine Eingabevorrichtung, insbesondere eine Eingabetastatur zur Vorgabe einer gewünschten Bohrtiefe vorhanden sein sollte. Diese Eingabetastatur ermöglicht in Verbindung mit einer Speichereinrichtung der Elektronik die Aktivierung einer optischen oder akustischen Signaleinrichtung zur Anzeige einer vorgegebenen Bohrtiefe oder gegebenenfalls auch eines Ausschaltens des Bohrgeräts, damit die vorgegebene Bohrtiefe nicht, auch nicht versehentlich, überschritten wird.

Neben der Möglichkeit einen erfindungsgemäßen Abstandmesser direkt in das Gehäuse des Bohrgerätes zu integrieren, hat es sich in der Praxis als besonders zweckmäßig erwiesen, wenn der Abstandmesser als selbstständiges Bauteil, vorzugsweise lösbar, am Bohrgerät befestigbar ist. Dies ermöglicht nicht nur das beliebige Nachrüsten vorhandener Bohrgeräte, sondern auch den Austausch des Abstandmessers von einem Bohrgerät zum anderen, wobei es auf die positionsgenaue Anordnung an einer bestimmten Stelle des jeweiligen Bohrgerätes gar nicht ankommt, da ja die Bohrtiefe über die Differenz des aktuellen Abstandes und des Anfangsabstandes des Abstandmessers vom Werkstück bestimmt wird.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: Eine Seitenansicht eines handgeführten Bohrgerätes mit einer am vorderen Handgriff befestigten Vorrichtung zur Messung der Bohrungstiefe und

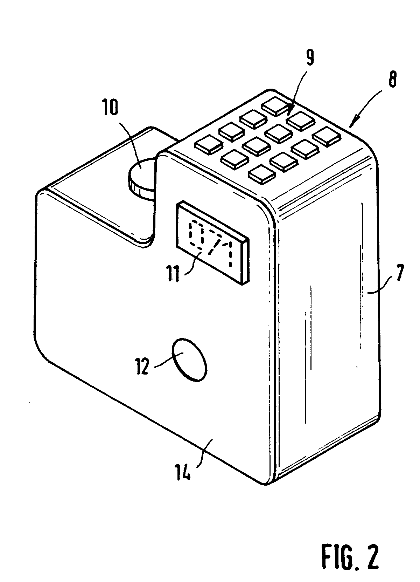

- Fig. 2: eine vergrößerte perspektivische Ansicht des in Fig. 1 verwendeten, als separates Bauteil am Bohrgerät zu befestigenden Abstandmesser.

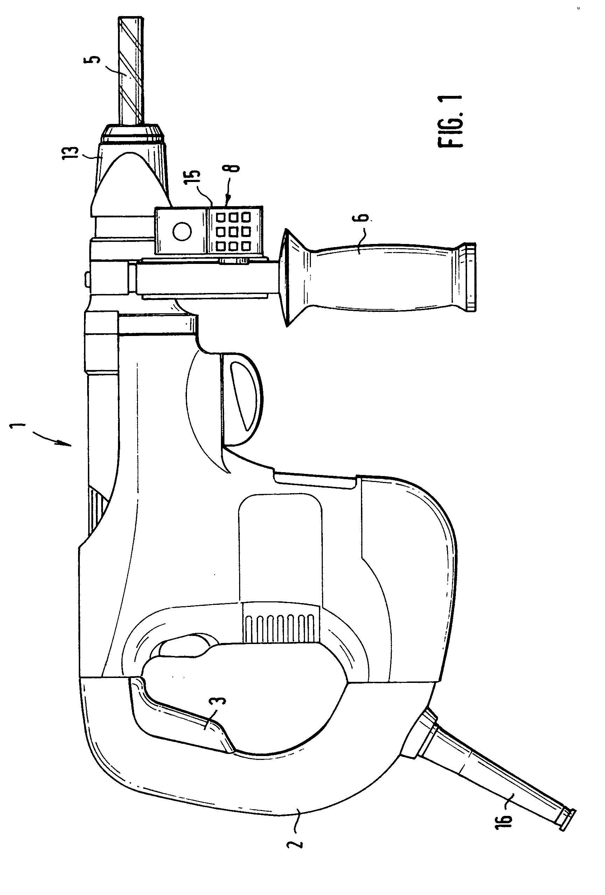

Das in Fig. 1 gezeigte Bohrgerät 1 mit einem rückwärtigen Handgriff 2, an dem der Funktionsschalter 3 zum Ein- und Ausschalten und zur Regelung der Drehzahl des Bohrwerkzeugs 5 angeordnet ist, ist in üblicher Weise mit einem quer abstehenden vorderen Handgriff 6 versehen, an dem im gezeigten Ausführungsbeispiel als separates Bauteil in einem eigenen Gehäuse 7 ein erfindungsgemäßer Abstandmesser 8 in nicht näher gezeigter Weise befestigt ist, der mit einer auf optischer, akustischer, kapazitiver oder induktiver Basis arbeitenden Sensorik versehen ist. Der Abstandmesser 8 weist im gezeigten Ausführungsbeispiel eine Eingabetastatur 9 sowie einen Eingabeknopf 10 auf, mithilfe dessen jeweils ein Zurücksetzen beim erneuten Ansetzen des Bohrwerkzeugs an einer Wand oder einem Werkstück erfolgen kann, sodass anschließend die Messung der Bohrtiefe durch Differenzbestimmung des bei der Nullsetzung vorhandenen Anfangsabstandes des Abstandmessers von der Wand bzw. dem Werkstück und dem jeweils aktuellen Wandabstand bestimmt werden kann. Diese Differenz kann als Bohrtiefe auf der Anzeigevorrichtung 11 angezeigt werden, wobei zusätzlich auch noch eine optische oder akustische Anzeigevorrichtung 12 vorhanden sein kann, die bei Erreichen einer vorgegebenen Bohrtiefe aufblinkt oder einen Ton auslöst, sodass die Bedienungsperson sofort das Erreichen der vorgegebenen Bohrtiefe erkennen kann. Gegebenenfalls kann zu diesem Zeitpunkt auch ein Abschalten des Antriebs für den Bohrkopf 13 des Bohrgeräts erfolgen.

Der Aufbau der Sensorik kann, je nachdem ob sie auf optischer, akustischer, kapazitiver oder induktiver Basis arbeitet, unterschiedlich ausgebildet sein, sodass sie in den Zeichnungen im Einzelnen nicht dargestellt ist. Derartige berührungslose Sensoriken für eine Abstandsmessung sind im Übrigen an sich bekannt. Der Austritt beispielsweise eines von einer Laserdiode erzeugten Laserstrahls für eine optische Abstandsmessung liegt in der der Wand 14 abgelegenen Vorderwand 15 des Gehäuses 7 des Abstandmessers 8. Das Gehäuse 7 kann dabei neben der Sensorik und der Elektronik auch eine Batterie oder einen Akku zur Versorgung des Abstandmessers aufweisen. Bei etwaigen stationärem Anbau des Abstandmessers an einem Bohrgerät, vorzugsweise unter Integration in dessen Gehäuse, ist es dabei im Allgemeinen zweckmäßiger, die Stromversorgung über die elektrische Stromversorgung des Bohrgeräts 1 über dessen Anschlusskabel 16 zu bewerkstelligen.

## Patentansprüche

1. Vorrichtung zur Messung der Tiefe einer Bohrung, die von einem Bohrgerät, insbesondere einem handgeführten Bohrgerät, erzeugt wird, **gekennzeichnet durch** einen an einem Lagerabschnitt (6) in der Nähe des rotierenden Bohrkopfes des Bohrgerätes (13) angeordneten berührungslosen Abstandsmesser (8) zur Bestimmung des sich mit der Bohrtiefe entsprechend ändernden Abstandes vom Werkstück.

2. Vorrichtung nach Anspruch 1, **dadurch gekennzeichnet, dass** der Abstandmesser (8) eine auf optischer, akustischer, kapazitiver oder induktiver Basis arbeitende Sensorik aufweist.

3. Vorrichtung nach Anspruch 1 oder 2, **dadurch gekennzeichnet, dass** der Abstandmesser (8) die Bohrtiefe jeweils als Differenz des aktuellen Abstandes und des Anfangsabstandes beim Ansetzen des Bohrgerätes am Werkstück bestimmt.

4. Vorrichtung nach einem der Ansprüche 1 bis 3, **dadurch gekennzeichnet, dass** der Abstandmesser (8) eine vorzugsweise Akku- oder Batteriebetriebenen Elektronik aufweist, der eine Anzeigevorrichtung (11) für die jeweilige Bohrtiefe zugeordnet ist.

5. Vorrichtung nach Anspruch 4, **dadurch gekennzeichnet, dass** dem Abstandmesser (8) eine Eingabetastatur (9) zur Vorgabe einer gewünschten Bohrtiefe aufweist.

6. Vorrichtung nach Anspruch 5, **dadurch gekennzeichnet, dass** der Abstandmesser (8) eine optische oder akustische Signaleinrichtung (12) zur Anzeige einer vorgegebenen Bohrtiefe zugeordnet ist.

7. Vorrichtung nach einem der Ansprüche 1 bis 6, **dadurch gekennzeichnet, dass** der Abstandmesser in das Gehäuse des Bohrgerätes integriert ist.

8. Vorrichtung nach einem der Ansprüche 1 bis 6, **dadurch gekennzeichnet, dass** der Abstandmesser (8) als selbstständiges Bauteil, vorzugsweise lösbar, am Bohrgerät (1) befestigbar ist.
